# EUROPÄISCHE PATENTSCHRIFT

(11) **EP 3 615 179 B1**
(45) Veröffentlichungstag und Bekanntmachung des Hinweises auf die Patenterteilung: **25.02.2026**
(21) Anmeldenummer: 18720262.7
(22) Anmeldetag: 27.04.2018
(51) Int. Cl.: C04B 35/01, C01B 13/08, F17C 11/00, B01D 53/02, B01D 53/04, B01J 20/02, B01J 20/06

(54) **MATERIAL ZUM SPEICHERN UND FREISETZEN VON SAUERSTOFF**
MATERIAL FOR STORING AND RELEASING OXYGEN
MATÉRIAU POUR LE STOCKAGE ET LA LIBÉRATION D'OXYGÈNE

(30) Priorität: 28.04.2017 DE 102017109221
(43) Veröffentlichungstag der Anmeldung: 04.03.2020
(73) Patentinhaber: Tasch, Alexander, 37359 Küllstedt (DE)
(72) Erfinder: Tasch, Alexander, 37359 Küllstedt (DE)
(74) Vertreter: Meissner Bolte Partnerschaft mbB
(86) Internationale Anmeldenummer: PCT/EP2018/060958
(87) Internationale Veröffentlichungsnummer: WO 2018/197703

(56) Entgegenhaltungen:
- EP-A1- 2 246 305
- DE-A1- 102012 025 205
- US-A1- 2016 361 711
- US-B1- 6 361 584

## Beschreibung

Die Erfindung betrifft ein Material zum Speichern und Freisetzen von Sauerstoff mit den Merkmalen des Anspruchs 1.

Oxidkeramische Stoffsysteme zur Sauerstofferzeugung bzw. Luftzerlegung sind bekannt. So haben beispielsweise Keramiken mit perowskitischer Kristallstruktur die Eigenschaft, dass diese Sauerstoff reversibel in ihr Kristallgitter einbauen oder durch ihr Volumen hindurchdiffundieren lassen.

Es gibt zwei Ansätze, welche verfolgt werden, Perowskit-Keramiken zur Luftzerlegung zu nutzen. Zum einen werden keramische Membranen aus diesen Verbindungen hergestellt, welche aufgrund ihrer chemischen Eigenschaften bei Temperaturen von ca. 800 °C Sauerstoff von einem sauerstoffreichen zu einem sauerstoffarmen Gasraum durch ihr Kristallgitter hindurchdiffundieren lassen. Der sauerstoffarme Gasraum wird dabei als Sweep-Seite, der sauerstoffreiche Gasraum als Feed-Seite bezeichnet. Im Gegenzug hierzu findet durch die Keramik hindurch ein elektrischer Ladungsausgleich in entgegengesetzter Richtung statt. Aufgrund der hohen Anzahl an möglichen Ionen-Kombinationen existieren eine Vielzahl solcher gemischtleitenden Keramiken (MIEC - mixed ionic-electronic conductor).

Die Sauerstoffdiffusion kann bei konstant gehaltener Sauerstoffpartialdruckdifferenz zwischen beiden Seiten für eine kontinuierliche Produktion höchstreinen Sauerstoffs genutzt werden. Dieses kommt technisch in Form der auf dem Markt verfügbaren Ionen-Transportmembransysteme zur Anwendung. Allerdings eignet sich dieses Verfahren nicht zur Stickstoff- oder Inertgasproduktion, da die treibende Kraft, die Sauerstoffpartialdruckdifferenz zwischen Feed- und Sweep-Seite, mit abnehmendem Sauerstoffgehalt des Feed-Stromes gegen Null strebt.

Der zweite Ansatz, die perowskitkeramischen Systeme zur Sauerstoffseparation technisch zu nutzen, ist deren Verwendung als Sauerstoffspeichermaterialien (OSM - Oxygen Storage Material). So besitzen die perowskitischen Keramiken neben ihrer sauerstoffleitenden auch noch die Eigenschaft, Sauerstoff im gesamten Volumen mehr oder minder gleichverteilt ein- und wieder auszubauen. Somit ergeben sich für diese Keramik zwei Grenzzustände, die mit den Begriffen "Entladen" und "Beladen" bezeichnet werden.

Zur technischen Nutzung wird die perowskitische Keramik z.B. als eine Festbettschüttung in einen Reaktor eingebracht und abwechselnd mit beheizter Luft umspült oder einem Vakuum ausgesetzt. Ist die Keramik entladen, so nimmt sie den Sauerstoff aus der umströmenden Luft auf. Sie wird somit allmählich mit Sauerstoff beladen. Ist die Keramik schließlich beladen, wird der Luftstrom abgestellt und der Reaktor evakuiert. Die Keramik gibt dann ihren zuvor aufgenommenen Sauerstoff wieder ab. Dieser diskontinuierliche Prozess kann permanent wiederholt werden. Betreibt man nun mindestens zwei dieser Reaktoren parallel und gegenläufig, lässt sich somit ein kontinuierlicher Prozess zur Luftzerlegung generieren. Dieser Prozess wird z.T. auch als Hochtemperatur Druckwechseladsorption (high temperature pressure swing adsorption) bezeichnet und ist somit eine Hochtemperaturvariante des PSA-Verfahrens. Ein Beispiel hierfür ist in der US 6 361 584 B1 offenbart. Die Bezeichnung "Adsoption" ist in diesem Zusammenhang allerdings nicht ganz korrekt, da es sich dem Wesen nach in Wirklichkeit um eine Absorption handelt, bei der der Sauerstoff nicht nur auf der Oberfläche der Keramik verbleibt, sondern in die Keramik aufgenommen wird.

Ein weiteres Beispiel für die Anwendung eines keramischen Sauerstoffträgers ist die so genannte CLC-Technologie (Chemical Looping Combustion). Hierbei wird ein Brennstoff zusammen mit dem keramischen Sauerstoffträger in Form oxidkeramischer Partikel in einem Wirbelschichtreaktor in Kontakt gebracht. Dabei gibt der Sauerstoffträger einen Teil seines Sauerstoffs an den Brennstoff ab. Er oxidiert diesen und ermöglicht somit eine Verbrennung unter Ausschluss von Luft. Die somit entladenen oxidkeramischen Partikel werden anschließend in einen zweiten Wirbelschichtreaktor befördert, wo sie mit Luft umspült und wieder mit Sauerstoff beladen werden. Ist dies geschehen, werden sie wieder dem Verbrennungsreaktor zugeführt und ermöglichen somit erneut die Verbrennung.

Beim CLC-Verfahren wirbeln somit kleinste Partikel der Sauerstoffspeichermaterialien in der Gasphase und müssen stets von einem zum anderen Reaktor hin und her transportiert werden. Dies stellt derzeit noch eines der größten Probleme in der CLC-Technik dar, denn die Partikel agglomerieren bei den vorherrschenden Temperaturen oft, werden dadurch nicht mehr ausreichend verwirbelt und verstopften teilweise sogar die Anlagentechnik.

Aus dem Stand der Technik sind auch weitere derartige Keramiken bekannt:
Die Publikation "Preparation and physical properties of the solid solutions Cu1+xMn1-xO2 (0 ≤ x ≤ 0,2)" (M. Trari, J. Töpfer et al., Journal of Solid State Chemistry 178 (2005) 2751-2758) untersucht die thermische Stabilität von Crednerit in Luft. Dabei wird eine Reaktion unter Sauerstoffaufnahme zu Spinell und Tenorit beobachtet. Mit steigender Temperatur wird eine Reaktion vom Spinell und Tenorit unter Sauerstoffabgabe zurück zum Crednerit beobachtet.

Die DE 10 2012 025 205 A1 offenbart ein keramisches Sauerstoffspeichermaterial, welches Spinell- und/oder Delafossitphasen aufweist und Sauerstoff reaktiv aufnehmen und wieder abgeben kann. Die Druckschrift lehrt die Verwendung des Sauerstoffspeichermaterials zur Sauerstofferzeugung bei sehr langen Prozesszeiten von 1 bis 2 Stunden.

Die EP 2 853 306 A1 offenbart eine Anlage zur Nutzung von Sauerstoffspeichermaterialien in so genannten Hochtemperatur-PSA-Anlagen. Die dort genannte Lehre zielt auf die Verwendung von Perowskit-Keramiken als Sauerstoffspeichermaterialien ab.

Die US 6 361 584 B1 offenbart ein Verfahren und System zur Nutzung verschiedener oxidkeramischer Materialien zur Sauerstoffabtrennung aus einem Feed-Gasstrom in einer Hochtemperatur-PSA-Anlage. Bei der dort offenbarten Lehre wird auf eine Fülle an verschiedenen keramischen Strukturen eingegangen. Allen diesen Strukturen ist gemein, dass es sich bei ihnen um Keramiken handelt, die vom nicht-reaktiven Typ sind. Sie unterliegen insbesondere keiner Phasenumwandlung und können daher lediglich im Rahmen ihrer Phasenbreiten Sauerstoff aufnehmen und wieder abgeben.

Die US 2010 278719 A1 offenbart ein Verfahren, bei dem ein kupferfreies Material, bestehend aus Eisen-Mangan-Oxiden, zur Hochtemperatur-Sauerstoff-Produktion genutzt wird.

Die US 2015 290627 A1 und die US 2016 361711 A1 offenbaren Kupfer-Mangan-Spinelle als Sauerstoffspeichermaterialien und deren Verwendung für die Abgasnachbehandlung in Kraftfahrzeugen.

Die Materialien, die nach dem gegenwärtigen Stand der Technik bekannt sind und zur Sauerstoffspeicherung- bzw. Erzeugung eingesetzt werden, weisen insgesamt eine Reihe von Nachteilen auf. Diese sind insbesondere damit verbunden, dass die bekannten Materialien entweder nur ein relativ begrenztes Sauerstoffspeichervermögen aufweisen, die Sauerstoffspeicherung und -abgabe jeweils mit langen Prozesszeiten für das Be- und Entladen verbunden und die energetische Effizienz der bekannten Materialien zu gering für einen wirtschaftlichen Einsatz ist. Die bekannten Materialien sind nur unter sehr begrenzten Prozessbedingungen einsetzbar, wodurch eine möglichst universelle und flexible Verwendbarkeit bedauerlicherweise ausscheidet. Außerdem sind die bekannten Materialien relativ verschleißanfällig oder nicht ausreichend korrosionsbeständig wodurch ihr Wirkungsgrad nach einer bestimmten Anzahl von Prozesszyklen und einer gewissen Verwendungsdauer abnimmt.

Es ergibt sich somit die Aufgabe, ein Material zur Sauerstoffspeicherung bzw. - separation, dessen Verwendung sowie eine Anlage hierfür anzugeben, mit denen die genannten Nachteile beseitigt werden können. Insbesondere sollen möglichst kurze Prozesszeiten in Verbindung mit einer langen Nutzungsdauer und einem möglichst breiten Anwendungsgebiet gesichert werden.

Die Aufgabe wird mit einem Material zum Speichern und Freisetzen von Sauerstoff mit den Merkmalen des Anspruchs 1 gelöst. Die Unteransprüche enthalten zweckmäßige und/oder vorteilhafte Ausführungsformen und Ausgestaltungen des Materials sowie Verwendungen und Anwendungen des Materials.

Das Material zum Speichern und Freisetzen von Sauerstoff besteht erfindungsgemäß aus einer reaktiven Keramik aus Kupfer-, Mangan- und Eisenoxiden.

Die reaktive Keramik ist erfindungsgemäß als eine lose Schüttung von Bruchstücken, Pellets oder granulierten Körpern auf einem Materialträger oder als eine aufgetragene Materialschicht auf einem Materialträger in ein Reaktorgefäß einbringbar.

Erfindungsgemäß gehen die Kupfer-, Mangan- und Eisenoxide der reaktiven Keramik je nach dem im Material gebundenen Sauerstoffgehalt unterschiedliche Verbindungen miteinander ein, sodass einzelne Oxide nebeneinander, aber auch Mischoxide oder Kombinationen aus beidem gleichzeitig vorliegen können.

Als weiteres erfindungswesentliches Merkmal weist die reaktive Keramik eine chemische Zusammensetzung auf, bei der das Stoffmengenverhältnis zwischen dem Anteil von Kupfer und dem vereinigten Anteil von Mangan und Eisen zwischen 0,7/0,3 und 0,4/0,6 und das Stoffmengenverhältnis zwischen Mangan und Eisen zwischen 0,2/0,8 und 0,99/0,01 liegt.

Erfindungswesentlich ist außerdem, dass die reaktive Keramik die Phasen Crednerit / CuMn₁₋ₓFeₓO₂ mit 0 ≤ x ≤ 0,75 und Delafossit / CuFe₁₋ₓMnₓO₂ mit 0 ≤ x < 0,25, Spinell / CuMn₂₍₁₋ₓ₎Fe₂ₓO₄ mit 0 ≤ x ≤ 1, Tenorit / CuO, Hausmannit / Mn₃O₄, Cuprit / Cu₂O aufweist, wobei das Verhältnis der einzelnen Phasen zueinander von dem Beladezustand des keramischen Materials mit Sauerstoff abhängig ist.

Dabei zeigt erfindungsgemäß die reaktive Keramik in Abhängigkeit vom Sauerstoffpartialdruck einer umgebenden Atmosphäre und/oder einer Umgebungstemperatur einen beliebig oft durchlaufbaren Übergangsbereich zwischen einem Entladungsgrenzzustand aus einer dreiphasigen Crednerit/Cuprit/Hausmannit-Mischkeramik und einem Beladungsgrenzzustand aus einer zweiphasigen Spinell/Tenorit-Mischkeramik. Ein Durchlaufen des Übergangsbereiches von dem Entladungsgrenzzustand in Richtung des Beladungsgrenzzustandes ist mit einer Sauerstoffaufnahme und ein Durchlaufen des Übergangsbereiches von dem Beladungsgrenzzustand in Richtung des Entladungsgrenzzustandes ist mit einer Sauerstofffreisetzung verbunden.

Dabei wird die Reaktionsrichtung und der Reaktionsverlauf durch die Kombination der Einflussgrößen des Sauerstoffpartialdrucks der umgebenen Atmosphäre und der Temperatur des Materials beeinflusst, wobei die Reaktionszeiten zur Be- und Entladung der reaktiven Keramiken im Bereich weniger Sekunden bis Minuten liegen.

Erfindungsgemäß weist die reaktive Keramik infolge der Sauerstoffabgabe beim Durchlaufen des Übergangsbereiches in Richtung des Entladungsgrenzzustands eine Selbstporosierung auf, wobei sich in der reaktiven Keramik eine Porosität im Bereich von 25 Volumen-% bis 50 Volumen-% einstellt.

Das erfindungsgemäße Material besteht somit aus verschiedenen Kupfer-, Mangan- und Eisenoxiden, welche je nach dem Sauerstoffgehalt des Materials unterschiedliche Verbindungen miteinander eingehen. Dabei können einzelne Oxide nebeneinander, es können aber auch Mischoxide oder Kombinationen aus beidem gleichzeitig vorliegen. Hierbei können die Strukturen Crednerit und Delafossit, Spinell, Tenorit, Hausmannit und Cuprit auftreten. Das Verhältnis der einzelnen Phasen zueinander richtet sich nach dem Beladezustand des keramischen Materials, wobei sich die erwähnten Beladungs- und Entladungsgrenzzustände einstellen. Zwischen diesen beiden Grenzzuständen existiert ein Übergangsbereich, in welchem je nach Beladezustand des Materials alle Zwischenzustände vorkommen. Die Keramik ist deswegen eine reaktive Keramik, weil die Prozesse der Sauerstoffbeladung und der Sauerstoffentladung mit einem Strukturumbau innerhalb der Keramik verbunden sind.

Es gibt also einen fließenden Übergang vom entladenen zum beladenen Grenzzustand bei der Sauerstoffaufnahme sowie umgekehrt bei der Sauerstoffabgabe. Dieser Übergang ist durch Oxidations- bzw. Reduktionsreaktionen der keramischen Komponenten gekennzeichnet. Im Entladungsgrenzzustand besteht das Material im Wesentlichen aus den Phasen Crednerit, Hausmannit und Cuprit und im Beladungsgrenzzustand im Wesentlichen aus den Phasen Spinell und Tenorit. Der Übergangsbereich wird somit in seinen Grenzzuständen von einem einerseits dreiphasigen und andererseits zweiphasigen Mischsystem begrenzt.

Erfindungsgemäß weist, wie erwähnt, die reaktive Keramik eine chemische Zusammensetzung auf, bei der das Stoffmengenverhältnis zwischen dem Anteil von Kupfer und dem vereinigten Anteil von Mangan und Eisen zwischen 0,7/0,3 und 0,4/0,6 und das Stoffmengenverhältnis zwischen Mangan und Eisen zwischen 0,2/0,8 und 0,99/0,01 liegt.

Die so ausgebildete reaktive Keramik weist eine im Vergleich zu den bekannten Sauerstoffspeichermaterialien hohe Sauerstoffspeicherkapazität von 4,0 bis 6,5 Ma.-% auf.

Bei einer Ausführungsform der reaktiven Keramik ist das Durchlaufen des Übergangsbereichs zwischen dem Entladungsgrenzzustand und dem Beladungsgrenzzustand in beide Richtungen in einem Temperaturbereich von 400°C bis 1200°C ausführbar.

Wie erwähnt, weist die reaktive Keramik erfindungsgemäß infolge der Sauerstoffabgabe beim Durchlaufen des Übergangsbereiches in Richtung des Entladungsgrenzzustands eine Selbstporosierung auf, wobei sich in der reaktiven Keramik eine Porosität im Bereich von 25 Volumen-% bis 50 Volumen-% einstellt.

Diese erfindungsgemäße Selbstporosierung verhindert ein Verdichten und Agglomerieren der reaktiven Keramik und sichert gleichzeitig in Verbindung mit der Be- und Entladung mit Sauerstoff eine Struktur, die dem Gasaustausch mit der umgebenden Atmosphäre außerordentlich zweckdienlich ist. Wichtig ist hier, dass dadurch die Funktionalität der reaktiven Keramik gerade durch den laufenden Betrieb erhalten bleibt und sich gleichsam selbst regeneriert.

Bei einer weiteren Ausgestaltung weist die reaktive Keramik einen Zusatz von bis zu 25 mol-% Aluminium, Nickel, Kobalt, Chrom und/oder Lithium auf. Durch diese Zusätze lässt sich insbesondere die Korrosionsbeständigkeit der reaktiven Keramik gegenüber verschiedenen Gasen vorteilhaft beeinflussen sowie die Temperaturstabilität und die Reaktionscharakteristik den gegebenen Anforderungen anpassen.

Weiterhin ist die reaktive Keramik korrosionsresistent gegenüber kohlenstoffoxidhaltigen und/oder schwefeloxidhaltigen Gasen. Sie kann daher in belasteten oder korrosiven Umgebungen eingesetzt werden.

Die reaktive Keramik kann auf verschiedene Art eingesetzt werden. Erfindungsgemäß ist die reaktive Keramik als eine lose Schüttung von Bruchstücken, Pellets oder granulierten Körpern auf einen Materialträger in ein Reaktorgefäß eingebracht bzw. als Materialschicht auf einem Materialträger aufgebracht.

Bei der reaktiven Keramik ist das Durchlaufen des Übergangsbereiches von dem Beladungsgrenzzustand in Richtung auf den Entladungsgrenzzustand auch durch das Anlegen eines Vakuums oder durch ein Beaufschlagen mit Wasserdampf und/oder anderen sauerstoffarmen bzw. -freien Gasen induzierbar.

Die reaktive Keramik kann für unterschiedliche Zwecke verwendet werden.

Eine erste mögliche Verwendung erfolgt in einer Vorrichtung zur Inertgaserzeugung aus einem sauerstoffhaltigen Gasgemisch, insbesondere aus Luft, wobei die reaktive Keramik zum Entziehen des im Gasgemisch vorhandenen Sauerstoffanteils genutzt wird.

Eine weitere mögliche Verwendung erfolgt in einer Vorrichtung zur Sauerstoffgewinnung aus einem sauerstoffhaltigen Gasgemisch, insbesondere aus Luft, wobei die reaktive Keramik zum Entziehen und Zwischenspeichern des Sauerstoffs und zum nachfolgenden Abgeben des Sauerstoffs in ein getrenntes Gasvolumen genutzt wird.

Weiterhin ist die Verwendung der reaktiven Keramik in einer Vorrichtung zur Sauerstoffanreicherung sowie Sauerstoffabreicherung in Gasgemischen, insbesondere in Luft, möglich.

Möglich ist auch eine Verwendung der reaktiven Keramik in einer Vorrichtung zur katalytischen flammlosen Verbrennung gasförmiger Brennstoffe.

Eine Anlage zur Verwendung der vorgenannten reaktiven Keramik zum Speichern und Freisetzen von Sauerstoff enthält einen Reaktor mit einem mit der reaktiven Keramik befüllten Reaktionsraum, ein Heizsystem zum Beheizen des Reaktionsraums, eine Ventileinrichtung zur Steuerung eines in den Reaktionsraum ein- und ausströmenden Gasstromes und/oder zur Trennung von Nutz- und Abgas sowie Pumpen zum Erzeugen eines Über- und/oder Unterdrucks im Reaktionsraum. Bei einer Ausführungsform der Anlage sind mindestens zwei parallel geschaltete und in ihrem Arbeitstakt gegenläufig betriebene Reaktoren vorgesehen, wobei durch die gegenläufig betriebenen Reaktionen eine kontinuierliche Sauerstoffseparation ausführbar ist.

Das Material zum Speichern und Freisetzen von Sauerstoff soll nachfolgend anhand beispielhafter Ausführungsformen und Verwendungen näher beschrieben werden.

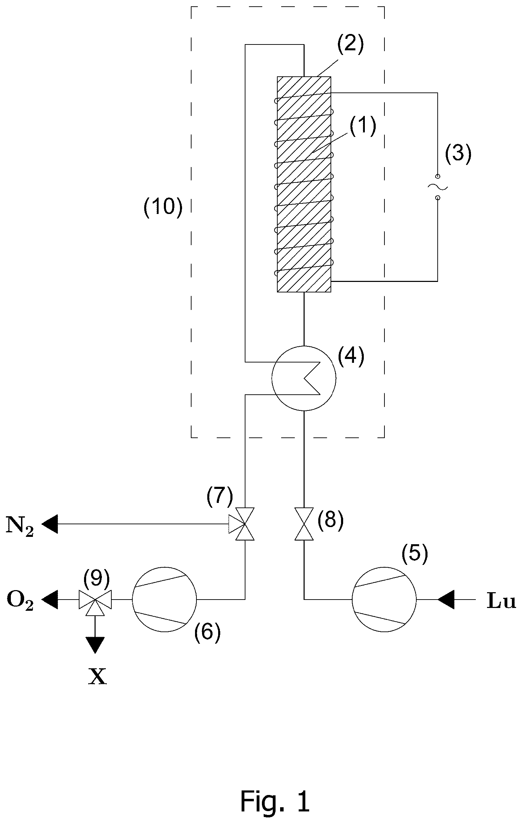

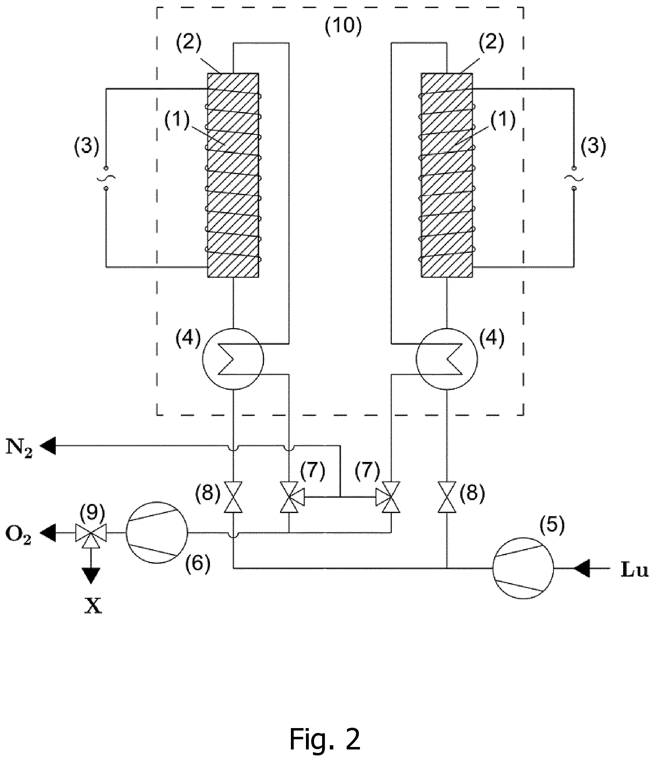

Zur Verdeutlichung dienen die Figuren 1 und 2. Es zeigt:
Fig. 1 eine beispielhafte Anlage mit einem die reaktive Keramik beinhaltenden Reaktor,
Fig. 2 eine beispielhafte Schaltung aus zwei, im Wechselbetrieb arbeitenden Reaktoren.

Das Material zum Speichern und Freisetzen von Sauerstoff ist ein keramisches Sauerstoffspeichermaterial, basierend auf Kupfer-, Mangan- und Eisen-Oxiden. Das Sauerstoffspeichermaterial ist eine reaktive Mischkeramik mit variierendem Phasenbestand, das bei einer Veränderung des Phasenbestands einen Übergang ausführt, wobei es Sauerstoff aufnehmen bzw. abgeben kann. Der aktuelle Phasenbestand der reaktiven Mischkeramik hängt somit vom Sauerstoffgehalt, also dem Beladezustand des Sauerstoffspeichermaterials, ab. Hierbei können zwei Grenzzustände für die reaktive Mischkeramik definiert werden, die einen Übergangsbereich einschließen, in welchem das Be- und Entladen mit Sauerstoff ausführbar ist. Diese Grenzzustände sind zum einen der Entladungsgrenzzustand und zum anderen der Beladungsgrenzzustand. Im Entladungsgrenzzustand ist die reaktive Keramik maximal entladen und hat allen möglich abzugebenden Sauerstoff abgegeben und im Beladungsgrenzzustand ist die reaktive Keramik maximal beladen und kann keinen weiteren Sauerstoff mehr aufnehmen.

Sowohl der Entladungsgrenzzustand als auch der Beladungsgrenzzustand sind in der reaktiven Keramik deutlich durch das Vorhandensein jeweils verschiedener Phasen nachweisbar und können über diese Phasen auch definiert werden. Der Entladungsgrenzzustand definiert sich bei dem hier vorliegenden Material aus den Phasen Crednerit, Hausmannit und Cuprit mit einem möglichen Anteil von Delafossit, während sich der Beladungsgrenzzustand durch die Phasen Spinell und Tenorit definiert. Der Übergang zwischen den beiden Grenzzuständen ist fließend und wird durch den Sauerstoffpartialdruck der umgebenen Atmosphäre sowie die Temperatur des Sauerstoffspeichermaterials bestimmt. Er geht mit einer Sauerstoffaufnahme bzw. Sauerstoffabgabe aus bzw. an die umgebende Atmosphäre einher.

Das Sauerstoffspeichermaterial ist vielseitig einsetzbar, so beispielsweise zur Separation von Sauerstoff aus sauerstoffhaltigen Gasgemischen. Somit ist es durch die Verwendung dieses Sauerstoffspeichermaterials möglich, Luft in Sauerstoff und sauerstofffreies Inertgas (d.h. Stickstoff, zusammen mit dem Anteil an Edel- und Spurengasen) zu trennen und sowohl den Sauerstoff als auch den Inertgasanteil getrennt zur Verfügung zu stellen. Es ist außerdem möglich, Luft oder andere Gasgemische mit Sauerstoff an- bzw. abzureichern.

Die Verwendung des keramischen Sauerstoffspeichermaterials wird durch eine Anlage ermöglicht, welche mindestens aus dem keramischem Sauerstoffspeichermaterial, einem Reaktor, Heizung, Wärmeübertrager, Gaspumpe, Vakuumpumpe, Ventilen sowie einer Steuereinheit besteht. Diese Anlage funktioniert in verschiedenen Ausführungen als Sauerstofferzeuger, Stickstofferzeuger, Luftzerleger oder Sauerstoffdosierer.

Das Material besteht aus verschiedenen Kupfer-, Mangan- und Eisenoxiden, welche je nach dem im Material gebundenen Sauerstoffgehalt unterschiedliche Verbindungen miteinander eingehen. So können einzelne Oxide nebeneinander, aber auch Mischoxide oder Kombinationen aus beidem gleichzeitig vorliegen. Hierbei können die Strukturen Crednerit (CuMn₁₋ₓFeₓO₂ mit 0 ≤ x ≤ 0,75) und Delafossit (CuFe₁₋ₓMnₓO₂ mit 0 ≤ x < 0,25) - zusammengefasst als Cu(Mn,Fe)O₂, Spinell Cu(Mn,Fe)₂O₄ (CuMn₂₍₁₋ₓ₎Fe₂ₓO₄ mit 0 ≤ x ≤ 1), Tenorit (CuO), Hausmannit (Mn₃O₄) und Cuprit (Cu₂O) auftreten. Das Verhältnis der einzelnen Phasen zueinander richtet sich nach dem Beladezustand des keramischen Materials.

Die Phasen Kupfer-Mangan-Crednerit (CuMnO₂) und Kupfer-Eisen-Delafossit (CuFeO₂) können einzeln nebeneinander oder als Mischphasen Cu(Mn,Fe)O₂ vorliegen. Wird dem Delafossit ein wachsender Anteil Mangan in seiner Zusammensetzung hinzu gesetzt, wandelt sich dieser allmählich in einen kristallografisch verzerrten Crednerit um. Beginnt man beim reinen Kupfer-Mangan-Crednerit und gibt diesem schrittweise Eisen hinzu, wandelt sich dieser allmählich in den Delafossit um. So ergibt sich eine durchgängige Mischreihe zwischen Crednerit und Kupfer-Eisen-Delafossit.

Erfindungsgemäß wird nun auf Crednerit zurückgegriffen, wobei im Vergleich zu Delafossit bei der Verwendung des Crednerits eine höhere Sauerstoffspeicherkapazität der reaktiven Keramik erreicht wird.

Die reaktive Keramik kann als Sauerstoffspeichermaterial zwei Grenzzustände einnehmen: den Entladungsgrenzzustand einerseits und den Beladungsgrenzzustand andererseits. Zwischen diesen beiden Grenzzuständen existieren je nach Beladezustand des Materials alle Zwischenzustände, es gibt also einen fließenden Übergangsbereich vom entladenen zum beladenen Grenzzustand sowohl bei der Sauerstoffaufnahme als auch umgekehrt bei der Sauerstoffabgabe. Dieser Übergang ist durch Oxidations- bzw. Reduktionsreaktionen der keramischen Komponenten gekennzeichnet. Das Material ist somit eine reaktive Keramik, in welcher der Sauerstoff über chemische Bindungen absorbiert bzw. unter Lösen der chemischen Bindungen freigesetzt wird.

In dem Entladungsgrenzzustand besteht das Material aus den Phasen Crednerit, Hausmannit und Cuprit mit einem gewissen, aber nicht notwendigerweise vorhandenen Anteil von Delafossit, während in dem Beladungsgrenzzustand die Phasen Spinell und Tenorit nachweisbar sind. Die reaktive Keramik führt somit im Zuge der Sauerstoffaufnahme bzw. -abgabe einen Übergang zwischen einem dreiphasigen und einem zweiphasigen Zustand aus.

Im Einzelnen erfolgen folgende Reaktionen zwischen dem Entladungsgrenzzustand und dem Beladungsgrenzzustand in der reaktiven Keramik unter Sauerstoffaufnahme und -abgabe: 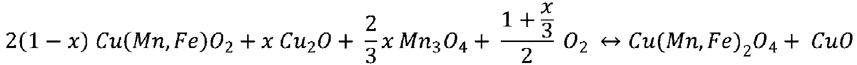 mit 0 ≤ x ≤ 0,5.

Die Reaktionsgleichung beschreibt hierbei von links nach rechts die Beladung und somit das Durchlaufen des Übergangsbereiches in Richtung des Beladungsgrenzzustandes und von rechts nach links die Entladung und somit das Durchlaufen des Übergangsbereiches in Richtung des Entladungsgrenzzustandes.

Das molare Verhältnis zwischen Mangan und Eisen in der Keramik (Mn,Fe) ist je nach Anwendungsfall und Anforderungen an das Material durch das molare Verhältnis der Ausgangsstoffe bei der Herstellung des erfindungsgemäßen Sauerstoffspeichermaterials mit einem Eisengehalt von 0 ≤ Fe/(Fe+Mn) ≤ 1 (molar) einstellbar.

Die Zusammensetzung, also das Phasenverhältnis der entladenen reaktiven Keramik und somit der Wert der Variable x hängt von den Bedingungen der Entladung (Temperatur, Sauerstoffpartialdruck und Zeit) sowie dem molaren Verhältnis der Elemente Eisen und Mangan, d.h. Fe/(Fe+Mn), ab.

Eine Ausgestaltung der reaktiven Keramik sieht vor, dass das Sauerstoffspeichermaterial einen Überschuss an Kupfer im folgenden Verhältnis aufweist: Cu/(Cu + Fe + Mn) > 0,5 (molar). Dies führt zu einer Erhöhung der Sauerstoffspeicherkapazität des Materials, da das Kupfer maßgeblich an den ablaufenden Redoxreaktionen zur Sauerstoffaufnahme und Abgabe beteiligt ist.

Eine weitere Ausgestaltung der reaktiven Keramik sieht vor, dass dieser Anteile von Aluminium, Nickel, Kobalt, Chrom, Lithium oder Kombinationen aus diesen zugegeben werden. Hierdurch können die Temperaturstabilität, die Reaktionsgeschwindigkeit, die Sauerstoffspeicherkapazität, die Reaktivität, die Porosität, die Stabilität und/oder die Festigkeit den jeweiligen Anforderungen einer Anwendung angepasst werden.

Das hier beschriebene reaktive keramische Sauerstoffspeichermaterial zeigt eine Sauerstoffspeicherkapazität im Bereich von 4,0 bis 6,5 Ma.-% bezogen auf die Masse der entladenen Keramik. Die Beladung findet unter Sauerstoffaufnahme aus der umgebenen Atmosphäre vorzugsweise im Bereich von 400 bis 900 °C und die Entladung unter Sauerstoffabgabe an die umgebene Atmosphäre im Temperaturbereich von 650 bis 1150 °C statt. Dabei werden bei Reaktionstemperaturen von 400 bis 1150 °C Reaktionsgeschwindigkeiten von bis zu 20 l_{O2/}(min*kg_{Keramik}) erreicht.

Die Reaktionszeiten zur Be- und Entladung der reaktiven Keramik liegen im Bereich weniger Sekunden bis Minuten, sie sind im Vergleich zu den Reaktionszeiten bei den aus dem Stand der Technik bekannten Materialien sehr kurz. Die Reaktionszeiten können durch die Stellgrößen Temperatur und Sauerstoffpartialdruck der umgebenen Atmosphäre maßgeblich beeinflusst werden.

Die Reaktionsrichtung und der Reaktionsverlauf werden durch die Kombination der Einflussgrößen des Sauerstoffpartialdrucks der umgebenen Atmosphäre und der Temperatur des Materials beeinflusst. Bei niedrigeren Temperaturen und höheren Sauerstoffpartialdrücken wird die Sauerstoffbeladung und bei höheren Temperaturen und niedrigeren Sauerstoffpartialdrücken die Sauerstoffentladung begünstigt.

Als sehr vorteilhaft für die Verwendung des hier beschriebenen Sauerstoffspeichermaterials vor allem in Hinblick auf eine Verwendung zur Sauerstoffseparation hat sich herausgestellt, den Sauerstoffpartialdruck durch das Erzeugen eines Unterdrucks bzw. das Anlegen eines Vakuums an die umgebende Atmosphäre abzusenken, das Material dadurch zu entladen und den Sauerstoff aus ihm herauszulösen. Weiterhin kann der Sauerstoffpartialdruck durch das Umspülen mit sauerstoffarmen bzw. -freien Gasen (z.B. Ar, CO₂, H₂O) herabgesetzt werden.

Die Beladung kann durch das Erzeugen eines Überdruckes in der sauerstoffhaltigen Atmosphäre um das Sauerstoffspeichermaterial herum begünstigt werden.

Überraschenderweise hat sich gezeigt, dass das erfindungsgemäße Sauerstoffspeichermaterial einen Prozess der Selbstporosierung erfährt, der direkt durch den Sauerstoffein- und -ausbau und den damit reaktiven Umbau der Keramik bewirkt wird. Es zeigt sich, dass sich über die Verwendungsdauer des Materials eine Gleichgewichtsporosität von 25 bis 50 Vol.-% einstellen lässt. Diese Porosität sichert gleichbleibende Sauerstoffspeichereigenschaften und wird durch die Verwendung der reaktiven Keramik selbst regeneriert.

Als sehr vorteilhafte Eigenschaft hat sich die Korrosionsbeständigkeit des keramischen Sauerstoffspeichermaterials erwiesen. So werden keinerlei Korrosionsprodukte beim Kontakt mit Kohlenstoffdioxid sowie Schwefeloxiden festgestellt. Dies ermöglicht einen außerordentlich vielseitigen Einsatz der reaktiven Keramik. Sie kann dadurch insbesondere zur Sauerstoffan- oder - abreicherung in Ab- oder Prozessgasen Verwendung finden.

Ein weiterer Vorteil des erfindungsgemäßen reaktiven keramischen Sauerstoffspeichermaterials ist dessen einfache Präparierbarkeit im Vergleich zu anderen keramischen Sauerstoffspeichermaterialien. Die reaktive Keramik wird vorrangig aus gesundheitlich unbedenklichen Kupfer-, Mangan- und Eisenoxiden per Pulver- und Festkörperpräparation hergestellt. Die zur technischen Verwendung vorgesehene Ausführungsform des erfindungsgemäßen Sauerstoffspeichermaterials ist als Bruchstücke, granulierte Körper oder in Form von Pellets möglich, die als lose Schüttung in einen entsprechenden Reaktionsraum eingefüllt werden können. Es ist aber auch möglich, die reaktive Keramik als Beschichtung auf einem Materialträger aufzubringen. In einem solchen Fall empfiehlt sich ein gitterförmiger oder lamellenartiger Materialträger, um eine möglichst große beschichtete Oberfläche sicherzustellen.

Zur Verwendung des erfindungsgemäßen reaktiven keramischen Sauerstoffspeichermaterials wird es entsprechend in einem Reaktionsraum eines Reaktors platziert. Der Reaktionsraum wird auf die jeweilige Reaktionstemperatur aufgeheizt und mit der entsprechend reaktionsbegünstigenden Atmosphäre beaufschlagt, die ein Durchlaufen des Übergangsbereiches in eine der beiden Richtungen, d.h. zu einem der beiden Grenzzustände, begünstigt.

Die Verwendung des reaktiven keramischen Sauerstoffspeichermaterials zur Sauerstoffseparation ermöglicht es, dass mit diesem Material Sauerstoff, technischer Stickstoff bzw. sauerstofffreies Inertgas erzeugt werden können. Zudem können sauerstoffhaltige Gasgemische mit Sauerstoff angereichert bzw. abgereichert und sauerstofffreie Gasgemische ebenfalls mit Sauerstoff angereichert werden. Diese Verwendung ist besonders für den Einsatz in einem so genannten Oxyfuel-Prozess sowie zur Sauerstoffanreicherung der Verbrennungsluft von großer Bedeutung. Letzteres kommt z.B. bei der Verbrennungsoptimierung allgemein sowie zur Verbrennung von niederkalorischen Schwachgasen, wie Deponie- oder Roh-Biogas zum Einsatz.

Weiterhin eignet sich das erfindungsgemäße keramische Sauerstoffspeichermaterial für eine katalytische flammlose Verbrennung gasförmiger Brennstoffe.

Zur Verwendung des keramischen Sauerstoffspeichermaterials soll nachfolgend eine Anlage angegeben werden, welche eine technische Nutzbarmachung derer sauerstoffspeichernden Eigenschaften der reaktiven Keramik ermöglicht. Die sehr guten sauerstoffspeichernden Eigenschaften der hier beschriebenen reaktiven Keramik ermöglichen es, die nachfolgend beschriebene Anlage unter sehr unterschiedlichen Aspekten zu betreiben: nämlich zur Sauerstoffextraktion, zur Gastrennung und zur Inertgasherstellung. Sämtliche Aspekte werden dabei mit der gleichen Effektivität ausgeführt, was die universelle Einsetzbarkeit der Anlage und vor allem der hier beschriebenen reaktiven Keramik begründet.

Die Figuren 1 und 2 zeigen hier beispielhafte Ausführungsformen für derartige Anlagen. Fig. 1 zeigt dabei eine Anlage mit einem Reaktor und somit einem Reaktionsraum, Fig. 2 zeigt eine Verschaltung aus zwei Reaktoren und Reaktionsräumen.

Das jeweilige funktionelle Herzstück der in den Figuren 1 und 2 gezeigten Anlagen bildet ein Reaktionsraum, welcher aus einem oder mehreren Reaktoren 2 bestehen kann. Der Reaktor 2 enthält jeweils das vorhergehend beschriebene keramische Sauerstoffspeichermaterial 1. In dem Reaktionsraum wird das Sauerstoffspeichermaterial zur Beladung mit sauerstoffhaltigen Gasen umspült oder zur Entladung mit einem Unterdruck oder einem Vakuum umgeben bzw. mit einem sauerstofffreien oder sauerstoffarmen Gas umspült. Um das für die Reaktionen nötige Temperaturniveau im Reaktionsraum zu erreichen, ist jeder Reaktor mit einem Heizsystem 3 umgeben. Das Heizsystem ist elektrisch sowie mittels einer Feuerung oder mit anderen Wärmequellen betreibbar.

Das Heizsystem 3 kann auf verschiedene Weise um den Reaktor herum angeordnet sein oder durch ihn hindurchgeführt werden, damit eine Gleichverteilung der Heizleistung gegeben ist und der Reaktionsraum mit dem Sauerstoffspeichermaterial optimal beheizt wird.

Im Reaktionsraum wird das reaktive keramische Sauerstoffspeichermaterial 1 entweder lose als Schüttung in Form von Pellets, Bruch oder granulierten Körpern ohne oder mit Hilfsvorrichtungen oder als Materialschicht auf einem Materialträger platziert. Diese Hilfsvorrichtungen können Zwischenböden, Siebe oder Füllkörper sein. Ziel ist es, hierdurch eine optimale Durchströmbarkeit des Materials zu erzielen und dies gegebenenfalls mit einem modularen Aufbau des Reaktors zu kombinieren.

Da es sich bei dem Gesamtprozess der Verwendung des keramischen Sauerstoffspeichermaterials zur Sauerstoffseparation um einen Hochtemperaturprozess handelt, ist ein System zur Wärmerückgewinnung/- übertragung an dem Reaktionsraum vorgesehen. Dieses System ist im hier vorliegenden Beispiel als ein Wärmeübertrager 4 ausgebildet. Aufgabe dieses Wärmeübertragers ist es, die durch aus dem Reaktionsraum ausströmenden Gase mitgeführte Wärme zurück an die einströmenden Gase zu übertragen. Hierzu bieten sich rekuperativ oder regenerativ arbeitende Systeme sowie eine Kombination aus beiden Systemen an.

Der das Sauerstoffspeichermaterial 1 enthaltende Reaktor 2, das Heizsystem 3 und der Wärmeübertrager 4 können zu einem Reaktormodul zusammengefasst sein. Solch ein Reaktormodul bildet eine funktionelle und bauliche Einheit innerhalb der erfindungsgemäßen Anlage zur Nutzung des reaktiven keramischen Sauerstoffspeichermaterials zur Sauerstoffseparation.

Das Reaktormodul ist als Ganzes von einer Wärmeisolierung 10 umschlossen, welche Wärmeverluste minimiert und somit einen energieeffizienten Betrieb der erfindungsgemäßen Anlage ermöglicht.

Um die benötigten Gase in den Reaktionsraum einzuleiten und in diesem den richtigen Druck zu erzeugen, ist eine Gaspumpe 5 vorgesehen, welche einen kontinuierlichen Gasstrom erzeugen kann, wobei der Druck des Gasstroms vorzugsweise nahe des Umgebungsdrucks liegt. Dieser einströmende Gasstrom wird durch ein erstes Ventil 8 gesteuert. Ein zweites Ventil 7, das in Strömungsrichtung nach dem Reaktormodul geschaltet ist, steuert den ausströmenden Gasstrom.

Um den Unterdruck bzw. das Vakuum im Reaktionsraum zu erzeugen und das Produktgas heraus zu befördern, ist eine Vakuumpumpe 6 vorgesehen.

Der Vakuumpumpe nachgeschaltet ist ein drittes Ventil 9, das die Trennung von Nutzgas O₂ und Abgas X ermöglicht. Hierdurch werden die negativen Auswirkungen einer Schaltverzögerung bzw. die Trägheit des Systems beim Wechsel von der Beladung auf die Entladung eliminiert und eine hohe Reinheit der Gase ermöglicht.

Die gesamte Anlage wird durch eine elektronische Steuer- und Regeleinheit automatisch geschaltet, kann gegebenenfalls aber auch manuell beeinflusst werden.

Die erfindungsgemäße Anlage zeichnet sich durch eine große Vielfalt an Einsatzmöglichkeiten aus. So kann sie als Sauerstoffseparationsanlage für die Produktion von Sauerstoff mit einer einstellbaren Reinheit von mehr als 99 Vol.-% und für die Produktion von Inertgas (d.h. Stickstoff und die sauerstofffreien Restgasanteile wie Argon) mit einem einstellbaren Restsauerstoffgehalt von weniger als 1 Vol.-% sowie für eine Kombination aus beidem eingesetzt werden. Weiterhin ist es mit einer Weiterbildung der erfindungsgemäßen Anlage möglich, einen Gasstrom mit einem einstellbaren Sauerstoffgehalt von 0 bis 100 Vol.-% zu erzeugen.

Vorteilhaft ist eine Ausgestaltung der erfindungsgemäßen Anlage in Form einer Parallelschaltung aus mehreren Reaktoren bzw. Reaktormodulen gemäß Fig. 2. Hierdurch wird erreicht, dass eine kontinuierliche Produktion aller Gase gleichzeitig ermöglicht wird. Da ein Zyklus der Sauerstoffseparation aus zwei Teilzyklen besteht, der Beladung und der Entladung des Sauerstoffspeichermaterials, kann bei gegenläufigem wechselseitigem Betrieb mehrerer dieser Teilzyklen ein kontinuierlicher Prozess der Sauerstoffseparation generiert werden.

Als sehr vorteilhaft hat es sich erwiesen, dass bei der hier gezeigten Anlage unter Verwendung des beschriebenen reaktiven Sauerstoffspeichermaterials bei sehr geringer Baugröße und geringen Anlagenkosten vergleichsweise große Mengen an Produktgasen mit hohen Reinheitsgraden im Vergleich zu im Stand der Technik bekannten Anlagen erzielt werden können. Weiterhin weist die Anlage aufgrund ihrer hohen Effizienz einen sehr geringen spezifischen Energiebedarf und dadurch geringe Betriebskosten für die Produktion der Gase auf. Letzteres resultiert unter anderem daraus, dass keine leistungsstarke und energieaufwendige Drucklufttechnik für den Betrieb der erfindungsgemäßen Anlage benötigt wird, da die Beladung vorzugsweise nahe dem Umgebungsdruck durchgeführt wird. Die verbaute Pumpentechnik kann daher vorzugsweise durch kleine energiesparende Membranpumpen realisiert werden.

Weiterhin zeigt sich bei der genannten Anlage vorteilhaft, dass sie aufgrund ihrer Bauart, Technologie und des Einsatzes kleiner geräuscharmer Pumpentechnik kaum Schallemissionen verursacht und somit auch für schallgeschützte Anwendungen eingesetzt werden kann.

Nachfolgend sollen mögliche Ausführungsbeispiele der reaktiven Keramik sowie der entsprechenden Anlage genannt werden.

### a) Mischreihe Cu-Mn-O/Cu-Mn-Fe-O/Cu-Fe-O

Es zeigt sich, dass die reaktiven keramischen Sauerstoffspeichermaterialien auf Basis von Kupfer-, Mangan- und Eisenoxiden eine durchgehende Mischreihe zwischen den Kupfer-Mangan-Oxiden und Kupfer-Eisen-Oxiden bilden. Diese Mischreihe kann aus den einzelnen Oxiden CuO, Mn₂O₃ und Fe₂O₃ präpariert und auf ihre sauerstoffspeichernden bzw. -separierenden Eigenschaften hin untersucht werden. Überaschenderweise zeigte sich, dass sich prinzipiell die gesamte Mischreihe als Sauerstoffspeichermaterial eignet. Allerdings sind damit unterschiedliche Phasenbestände, Reaktionsbedingungen und -eigenschaften verbunden. Dies bedeutet, dass je nach Anwendungskriterien das Material gezielt auf die Anforderungen angepasst werden kann.

### b) Erhöhung der Verwendungstemperatur durch Zugabe von Aluminiumoxid

Setzt man dem erfindungsgemäßen keramischen Sauerstoffspeichermaterial gamma-Aluminiumoxid zu, kann dessen Einsatztemperatur angehoben werden. So ergibt eine Zugabe von 10 Ma.-% Aluminium eine Erhöhung der Verwendungstemperatur um bis zu 200 K.

### c) Überschuss an Kupfer im Sauerstoffspeichermaterial

Gibt man dem beladenen Sauerstoffspeichermaterial neben dem schon vorhandenen Tenorit eine gleiche Menge an Tenorit zusätzlich hinzu, so ergibt sich bei der Entladung bei einer Temperatur von 1000 °C ein Masseverlust von rund 6,5 Ma.-%. Die Sauerstoffspeicherkapazität des keramischen Materials lässt sich somit weiter steigern.

### d) Anlage zur Luftzerlegung

Eine Anlage zeigt die Funktionalität des Materials, Verfahrens und der Anlage. So konnte unter Verwendung verschiedener Zusammensetzungen der Sauerstoffspeichermaterialien ein kontinuierlicher Sauerstoffstrom mit einer Reinheit > 98 Vol.-% und ein Stickstoffstrom mit einem Restsauerstoffgehalt < 2 Vol.-% aus der Luft erzeugt werden.

Weitere Ausführungsformen ergeben sich aus den Unteransprüchen.

### Bezugszeichenliste

- 1: Sauerstoffspeichermaterial
- 2: Reaktor
- 3: Heizsystem
- 4: Wärmeübertrager
- 5: Gaspumpe
- 6: Vakuumpumpe
- 7: Ventil für ausströmenden Gasstrom
- 8: Ventil für einströmenden Gasstrom
- 9: Ventil zur Trennung von Nutz- und Abgas
- 10: Wärmeisolierung

## Patentansprüche

1. Material zum Speichern und Freisetzen von Sauerstoff, bestehend aus einer reaktiven Keramik aus Kupfer-, Mangan- und Eisenoxiden,
die als eine lose Schüttung von Bruchstücken, Pellets oder granulierten Körpern auf einem Materialträger oder als eine aufgetragene Materialschicht auf einem Materialträger in ein Reaktorgefäß einbringbar ist, welche je nach dem im Material gebundenen Sauerstoffgehalt unterschiedliche Verbindungen miteinander eingehen,
sodass einzelne Oxide nebeneinander, aber auch Mischoxide oder Kombinationen aus beidem gleichzeitig vorliegen können,
wobei die reaktive Keramik eine chemische Zusammensetzung aufweist, bei der das Stoffmengenverhältnis zwischen dem Anteil von Kupfer und dem vereinigten Anteil von Mangan und Eisen zwischen 0,7/0,3 und 0,4/0,6 und das Stoffmengenverhältnis zwischen Mangan und Eisen zwischen 0,2/0,8 und 0,99/0,01 liegt,
wobei die reaktive Keramik die Phasen Crednerit CuMn₁₋ₓFeₓO₂ mit 0 ≤ x ≤ 0,75 und Delafossit / CuFe₁₋ₓMnₓO₂ mit 0 ≤ x < 0,25, Spinell / CuMn₂₍₁₋ₓ₎Fe₂ₓO₄ mit 0 ≤ x ≤ 1, Tenorit / CuO, Hausmannit / Mn₃O₄, Cuprit / Cu₂O aufweist, wobei das Verhältnis der einzelnen Phasen zueinander von dem Beladezustand des keramischen Materials mit Sauerstoff abhängig ist, wobei die reaktive Keramik in Abhängigkeit vom Sauerstoffpartialdruck einer umgebenen Atmosphäre, und/oder einer Umgebungstemperatur einen beliebig oft durchlaufbaren Übergangsbereich zwischen einem Entladungsgrenzzustand aus einer dreiphasigen Crednerit/Cuprit/Hausmannit-Mischkeramik und einem Beladungsgrenzzustand aus einer zweiphasigen Spinell/Tenorit-Mischkeramik zeigt,
wobei ein Durchlaufen des Übergangsbereiches von dem Entladungsgrenzzustand in Richtung des Beladungsgrenzzustandes mit einer Sauerstoffaufnahme und ein Durchlaufen des Übergangsbereiches von dem Beladungsgrenzzustand in Richtung des Entladungsgrenzzustandes mit einer Sauerstofffreisetzung verbunden ist,
wobei die Reaktionsrichtung und der Reaktionsverlauf durch die Kombination der Einflussgrößen des Sauerstoffpartialdrucks der umgebenen Atmosphäre und der Temperatur des Materials beeinflusst werden,
wobei die Reaktionszeiten zur Be- und Entladung der reaktiven Keramiken im Bereich weniger Sekunden bis Minuten liegen
und die reaktive Keramik infolge der Sauerstoffabgabe beim Durchlaufen des Übergangsbereiches in Richtung des Entladungsgrenzzustands eine Selbstporosierung aufweist, wobei sich in der reaktiven Keramik eine Porosität im Bereich von 25 Volumen-% bis 50 Volumen-% einstellt.

2. Material nach Anspruch 1,
**dadurch gekennzeichnet, dass**
die reaktive Keramik eine Sauerstoffspeicherkapazität von 4,0 bis 6,5 Masse-% aufweist.

3. Material nach einem der vorhergehenden Ansprüche,
**dadurch gekennzeichnet, dass**
bei der reaktiven Keramik das Durchlaufen des Übergangsbereichs zwischen dem Entladungsgrenzzustand und dem Beladungsgrenzzustand in beide Richtungen in einem Temperaturbereich von 400°C bis 1200°C ausführbar ist.

4. Material nach einem der vorhergehenden Ansprüche,
**dadurch gekennzeichnet, dass**
die reaktive Keramik einen Zusatz von bis zu 25 mol-% Aluminium, Nickel, Kobalt, Chrom und/oder Lithium aufweist.

5. Material nach einem der vorhergehenden Ansprüche,
**dadurch gekennzeichnet, dass**
die reaktive Keramik korrosionsresistent gegenüber kohlenstoffoxidhaltigen und/oder schwefeloxidhaltigen Gasen ist.

6. Material nach einem der vorhergehenden Ansprüche,
**dadurch gekennzeichnet, dass**
bei der reaktiven Keramik das Durchlaufen des Übergangsbereiches von dem Beladungsgrenzzustand in Richtung des Entladungsgrenzzustands durch das Anlegen eines Vakuums oder durch ein Beaufschlagen mit Wasserdampf und/oder anderen sauerstoffarmen bzw. -freien Gasen induzierbar ist.

7. Verwenden einer reaktiven Keramik nach einem der Ansprüche 1 bis 6 in einer Vorrichtung zur Inertgaserzeugung aus einem sauerstoffhaltigen Gasgemisch, wobei die reaktive Keramik zum Entziehen des im sauerstoffhaltigen Gasgemisch vorhandenen Sauerstoffanteils genutzt wird.

8. Verwenden einer reaktiven Keramik nach einem der Ansprüche 1 bis 6 in einer Vorrichtung zur Sauerstoffgewinnung aus einem sauerstoffhaltigen Gasgemisch, wobei die reaktive Keramik zum Entziehen und Zwischenspeichern des Sauerstoffs und zum nachfolgenden Abgeben des Sauerstoffs in ein getrenntes Gasvolumen genutzt wird.

9. Verwenden einer reaktiven Keramik nach einem der Ansprüche 1 bis 6 in einer Vorrichtung zur Sauerstoffregulierung in einem Gasgemisch, wobei die reaktive Keramik durch das Entziehen, Zwischenspeichern und/oder Abgeben des Sauerstoffs für eine Sauerstoffab- und/oder Sauerstoffanreicherung im Gasgemisch genutzt wird.

10. Verwenden einer reaktiven Keramik nach einem der Ansprüche 1 bis 6 in einer Vorrichtung zur katalytischen flammlosen Verbrennung gasförmiger Brennstoffe.

11. Anlage zur Verwendung einer reaktiven Keramik zum Speichern und Freisetzen von Sauerstoff nach einem der Ansprüche 1 bis 6, enthaltend
einen Reaktor (2) mit einem mit der reaktiven Keramik (1) befüllten Reaktionsraum,
ein Heizsystem (3) zum Beheizen des Reaktionsraums,
eine Ventileinrichtung zur Steuerung eines in den Reaktionsraum ein- und ausströmenden Gasstromes (7, 8) und/oder zur Trennung von Nutz- und Abgas (9),
eine Gaspumpe (5) zum Erzeugen eines Gasstromes in den Reaktionsraum und
eine Vakuumpumpe (6) zum Erzeugen eines Unterdrucks im Reaktionsraum.

12. Anlage nach Anspruch 11,
**dadurch gekennzeichnet, dass**
mindestens zwei parallel geschaltete und in ihrem Arbeitstakt gegenläufig betriebene Reaktoren (2) vorgesehen sind, wobei durch die gegenläufig betriebenen Reaktionen eine kontinuierliche Sauerstoffseparation ausführbar ist.

## Claims

1. Material for storing and releasing oxygen, consisting of a reactive ceramic made of copper, manganese, and iron oxides,
which can be introduced, as a loose fill of fragments, pellets, or granulated bodies on a material carrier or as an applied material layer on a material carrier, into a reactor vessel, which form different compounds with one another depending on the oxygen content bound in the material,
so that individual oxides adjacent to one another, but also mixed oxides or combinations of both can be present simultaneously,
wherein the reactive ceramic comprises a chemical composition, in which the substance amount ratio between the proportion of copper and the unified proportion of manganese and iron is between 0.7/0.3 and 0.4/0.6 and the substance amount ratio between manganese and iron is between 0.2/0.8 and 0.99/0.01,
wherein the reactive ceramic comprises the phases crednerite / CuMn₁₋ₓFeₓO₂ with 0 ≤ x ≤ 0.75 and delafossite / CuFe₁₋ₓMnₓO₂ with 0 ≤ x ≤ 1, spinel / CuMn₂₍₁₋ₓ₎Fe₂ₓO₄ with 0 ≤ x ≤ 1, tenorite / CuO, hausmannite / Mn₃O₄, cuprite / Cu₂O, wherein the ratio of the individual phases to one another depends on the load state of the ceramic material with oxygen,
wherein the reactive ceramic, depending on the oxygen partial pressure of a surrounding atmosphere, and/or an ambient temperature, displays a transition range which can be passed through arbitrarily often between on unloaded limit state made up of a three-phase crednerite/cuprite/hausmannite mix ceramic and a loaded limit state made up of a two-phase spinel/tenorite mixed ceramic,
wherein a pass through the transition range from the unloaded limit state in the direction of the loaded limit state is connected to an oxygen absorption and a pass through the transition range from the loaded limit state in the direction of the unloaded limit state is connected to an oxygen release,
wherein the reaction direction and the reaction course is influenced by the combination of the influencing variables of the oxygen partial pressure of the surrounding atmosphere and the temperature of the material,
wherein the reaction times for loading and unloading the reactive ceramics are in the range of a few seconds to minutes,
and the reactive ceramic has a self-porosification as a result of the oxygen discharge upon the pass through the transition range in the direction of the unloaded limit state, wherein a porosity in the range of 25 vol.-% to 50 vol.-% results in the reactive ceramic.

2. Material according to claim 1,
**characterized in that**
the reactive ceramic has an oxygen storage capacity of 4.0 to 6.5 mass-%.

3. Material according to any one of the preceding claims,
**characterized in that**
in the reactive ceramic, the pass through the transition range between the unloaded limit state and the loaded limit state in both directions can be carried out in a temperature range from 400°C to 1200°C.

4. Material according to any one of the preceding claims,
**characterized in that**
the reactive ceramic comprises an additive of up to 25 mol-% aluminum, nickel, cobalt, chromium, and/or lithium.

5. Material according to any one of the preceding claims,
**characterized in that**
the reactive ceramic is corrosion resistant to gases containing carbon oxides and/or sulfur oxides.

6. Material according to any one of the preceding claims,
**characterized in that**
in the reactive ceramic, the pass through the transition range from the loaded limit state in the direction of the unloaded limit state can be induced by applying a vacuum or by subjecting it to water vapor and/or other oxygen-poor or oxygen-free gases.

7. Use of a reactive ceramic according to any one of claims 1 to 6 in a device for producing inert gas from an oxygenated gas mixture, wherein the reactive ceramic is used to withdraw the oxygen component present in the oxygenated gas mixture.

8. Use of a reactive ceramic according to any one of claims 1 to 6 in a device for obtaining oxygen from an oxygenated gas mixture, wherein the reactive ceramic is used to withdraw and temporarily store the oxygen and to subsequently discharge the oxygen into a separate gas volume.

9. Use of a reactive ceramic according to any one of claims 1 to 6 in a device for oxygen regulation in a gas mixture, wherein the reactive ceramic is used, by way of the withdrawal, temporary storage, and/or discharge of the oxygen, for an oxygen depletion and/or oxygen enrichment in the gas mixture.

10. Use of a reactive ceramic according to any one of claims 1 to 6 in a device for catalytic flameless combustion of gaseous fuels.

11. Facility for the use of a reactive ceramic for storing and releasing oxygen according to any one of claims 1 to 6,
containing
a reactor (2) having a reaction chamber filled with the reactive ceramic (1),
a heating system (3) for heating the reaction chamber,
a valve device for controlling a gas flow (7, 8) flowing into and out of the reaction chamber and/or for separating useful gas and exhaust gas (9),
a gas pump (5) for generating a gas flow in the reaction chamber, and
a vacuum pump (6) for generating a negative pressure in the reaction chamber.

12. Facility according to claim 11,
**characterized in that** at least two reactors (2), which are connected in parallel and are operated in opposition in their work cycle, are provided, wherein a continuous oxygen separation can be carried out by the reactions operated in opposition.

## Revendications

1. Matériau pour le stockage et la libération d'oxygène, constitué d'une céramique réactive d'oxydes de cuivre, de manganèse et de fer, qui peut être introduite en vrac dans une cuve de réacteur sous forme de fragments, de pastilles ou de corps granulés déposés sur un support, ou sous forme de couche appliquée sur un support, qui forment différents composés selon la teneur en oxygène lié dans le matériau, permettant ainsi la présence simultanée d'oxydes individuels, d'oxydes mixtes ou de combinaisons d'oxydes,
dans lequel
la céramique réactive présente une composition chimique où le rapport molaire entre la proportion de cuivre et la proportion réunie de manganèse et de fer est compris entre 0,7/0,3 et 0,4/0,6, et le rapport molaire entre le manganèse et le fer est compris entre 0,2/0,8 et 0,99/0,01,
la céramique réactive présente les phases crednerite CuMn₁₋ₓFeₓO₂ avec 0 ≤ x ≤ 0,75, et delafossite / CuFe₁₋ₓMnₓO₂ avec 0 ≤ x < 0,25, spinelle / CuMn₂₍₁₋ₓ₎Fe₂ₓO₄ avec 0 ≤ x ≤ 1, ténorite / CuO, hausmannite / Mn₃O₄, cuprite / Cu₂O, où le rapport des phases individuelles entre elles dépend de l'état de charge en oxygène du matériau céramique,
la céramique réactive présente, en fonction de la pression partielle d'oxygène de l'atmosphère environnante et/ou de la température ambiante, une zone de transition, susceptible d'être traversée autant de fois que souhaité, entre un état limite de décharge d'une céramique mixte triphasée crednerite/cuprite/hausmannite et un état limite de charge d'une céramique mixte biphasée spinelle/ténorite,
le passage à travers la zone de transition de l'état limite de décharge à l'état limite de charge implique une absorption d'oxygène, et le passage à travers la zone de transition de l'état limite de charge à l'état limite de décharge implique une libération d'oxygène,
le sens de la réaction et le déroulement de la réaction sont influencés par la combinaison des grandeurs d'influence que sont la pression partielle d'oxygène de l'atmosphère environnante et la température du matériau,
les temps de réaction pour la charge et la décharge des céramiques réactives sont de l'ordre de quelques secondes à quelques minutes, et
la céramique réactive présente une porosité intrinsèque due à la libération d'oxygène lors du passage à travers la zone de transition vers l'état limite de décharge, la céramique réactive adoptant une porosité comprise dans la plage de 25 % en volume à 50 % en volume.

2. Matériau selon la revendication 1,
**caractérisé en ce que** la céramique réactive possède une capacité de stockage d'oxygène de 4,0 à 6,5 % en masse.

3. Matériau selon l'une des revendications précédentes,
**caractérisé en ce que** pour la céramique réactive, le passage à travers la zone de transition entre l'état limite de décharge et l'état limite de charge peut se faire dans les deux sens, dans une plage de températures de 400 °C à 1 200 °C.

4. Matériau selon l'une des revendications précédentes,
**caractérisé en ce que** la céramique réactive comprend un ajout d'aluminium, de nickel, de cobalt, de chrome et/ou de lithium allant jusqu'à 25 % en moles.

5. Matériau selon l'une des revendications précédentes,
**caractérisé en ce que** la céramique réactive est résistante à la corrosion par les gaz contenant des oxydes de carbone et/ou des oxydes de soufre.

6. Matériau selon l'une des revendications précédentes,
**caractérisé en ce que** pour la céramique réactive, le passage à travers la zone de transition de l'état limite de charge à l'état limite de décharge peut être induit par application d'un vide ou par exposition à de la vapeur d'eau et/ou à d'autres gaz appauvris ou dépourvus d'oxygène.

7. Utilisation d'une céramique réactive selon l'une des revendications 1 à 6 dans un dispositif de génération de gaz inerte à partir d'un mélange gazeux contenant de l'oxygène, la céramique réactive étant utilisée pour extraire la proportion d'oxygène présente dans le mélange gazeux contenant de l'oxygène.

8. Utilisation d'une céramique réactive selon l'une des revendications 1 à 6 dans un dispositif d'extraction d'oxygène d'un mélange gazeux contenant de l'oxygène, la céramique réactive étant utilisée pour extraire et stocker temporairement l'oxygène et pour libérer ensuite l'oxygène dans un volume de gaz distinct.

9. Utilisation d'une céramique réactive selon l'une des revendications 1 à 6 dans un dispositif de régulation de l'oxygène dans un mélange gazeux, la céramique réactive étant utilisée pour la réduction et/ou l'enrichissement en oxygène du mélange gazeux par extraction, stockage temporaire et/ou libération de l'oxygène.

10. Utilisation d'une céramique réactive selon l'une des revendications 1 à 6 dans un dispositif de combustion catalytique sans flamme de combustibles gazeux.

11. Système utilisant une céramique réactive pour le stockage et la libération d'oxygène selon l'une des revendications 1 à 6, comprenant
un réacteur (2) doté d'une chambre de réaction remplie de la céramique réactive (1),
un système de chauffage (3) pour chauffer la chambre de réaction,
un dispositif de vannes pour contrôler le débit de gaz (7, 8) entrant et sortant de la chambre de réaction et/ou pour séparer le gaz utile des gaz d'échappement (9),
une pompe à gaz (5) pour générer un flux de gaz dans la chambre de réaction, et
une pompe à vide (6) pour générer une dépression dans la chambre de réaction.

12. Système selon la revendication 11,
**caractérisé en ce qu'**il comporte au moins deux réacteurs (2) qui sont connectés en parallèle et dont les cycles de travail sont en sens opposés, permettant une séparation continue de l'oxygène grâce aux réactions en sens opposés.
